# EUROPÄISCHE PATENTANMELDUNG

(11) **EP 0 738 539 A1**
(43) Veröffentlichungstag der Anmeldung: **23.10.1996**
(21) Anmeldenummer: 94100541.5
(22) Anmeldetag: 15.01.1994
(51) Int. Cl.: B01D 53/56, B01D 53/86, B01J 19/12, C02F 1/72, C02F 1/32

(54) **Verfahren zur Reinigung von Gasen, Abgasen, Dämpfen und Wässern, von unerwünschten chemischen Stoffen**

(30) Priorität: 18.01.1993 DE 4301009; 18.06.1993 DE 4320218
(71) Anmelder: PCP-PHOTOCATALYTIC PURIFICATION GmbH, D-64839 Münster (DE)
(72) Erfinder: Die Erfindernennung liegt noch nicht vor
(74) Vertreter: Termin, Erich

(57) **Zusammenfassung**

Verfahren zur Reinigung von Gasen, Abgasen und Dämpfen, die Aerosole enthalten können und von Wasser, die mit unerwünschten chemischen Stoffen kontaminiert oder gemischt sind, mit Hilfe einer Photokatalysereaktion, die an der Oberfläche von Halbleiteroxidkatalysatoren, insbesondere Titandioxid, in einem geschlossenen oder offenen Apparat oder Apparatesystem unter Einwirkung von Energie in Form von Licht, insbesondere kurzwelligem Licht, nach den Verfahren des Schwebe- oder Festbettkatalysatorprinzips abläuft und gegebenenfalls einer Reinigung des Katalysators von den durch die Photokatalyse entstandenen Mineralisationsprodukten, dadurch gekennzeichnet, daß das Halbleiteroxid
a) mit mindestens einer flüssigen oder festen mineralischen Säure, Lauge, Salz oder Hydrolyseprodukten als die Elektrolyleitfähigkeit, und die Kapillarkondensation verbessernde Mittel versetzt wird und/oder
b) mit mindestens einer mineralischen Halogenverbindung, ausgenommen reine Fluorverbindungen, als Halogenradikalbildner dotiert wird, oder
c) mit mindestens einem Mittel dotiert wird, das die Eigenschaften und Funktionen gemäß a) und b) in einem Mittel vereinen.

## Beschreibung

Die vorliegende Erfindung betrifft ein Verfahren zur Reinigung von Gasen, Abgasen, Dämpfen und Wässern, die mit unerwünschten chemischen Stoffen kontaminiert sind oder in höheren Konzentrationen diesen beigemischt sind, mittels Photokatalysereaktionen die an der Oberfläche von Katalysatoren stattfinden.

Die Katalysatoren befinden sich in einem Schwebebett oder einem Festbett auf Katalysarorenträgern.

Im Schwebebett können die Katalysatoren auch ohne Katalysatorträger eingesetzt werden.

Katalysatorträger und Katalysatoren befinden sich in einem geschlossenen oder offenen System, durch das das zu reinigigende Substrat durchgeleitet wird.

Beim Festbettkatalysatorprinzip kann das System Katalysatorträger/Katalysator, kontinuierlich oder diskontinuierlich eine Waschzone zum Abwaschen der gebildeten Mineralisationsprodukte durchlaufen, die mit der Waschflüssigkeit abgeleitet werden. Die Reaktion wird durch Lichtphotonen induziert.

Übliche Photokatalysatoren die zur Anwendung kommen, sind gegebenenfalls dotierte Halbleiteroxide insbesondere jedoch Titandioxid. In der Tabelle 0 werden einige Beispiele für derartige Halbleiteroxide und die spezifische Photonenwellenlänge (aus der veröffentlichten Literatur) genannt, die zur Initierung einer photokatalytischen Reaktion mindestens erforderlich ist.

Derartige Verfahren sind bekannt und in der deutschen Patentanmeldungen Nr. 4023995 beschrieben, sowie in der WO 91/09823 und der WO 91/04094.

Da es sich beim Verfahren um eine photoneninduzierte, oberflächenaktivierte Katalysereaktion handelt, bedingt eine hohe Leistungseffizienz des Verfahrens, dass die Oberflächenexposition des Katalysators und die Photoneneinwirkung auf diesem optimal sind.

Wesentlich in der praktischen Nutzung des Verfahrens ist eine gleichmässige und Langwirksamkeit des eingesetzten Photokatalysators.

Im Rahmen dieser Reaktionsabläufe erfolgt eine katalysatorinterne gegenpolige Ionisierung des Photokatalysators, woraus die eigentliche, gewünschte Katalyseabbaureaktion resultiert.

Konkurrierend existiert jedoch eine Ladungsrekombinationsreaktion, die zur Löschung der Katalysatoraktivität führt.

Zur erneuten Katalysatoraktivierung ist parallellaufend eine erneute Photonenzufuhr erforderlich. In der Konsequenz ein vermehrter Energiebedarf auf apparativ limitiertem Raum.

Die katalysatorinterne Ladungsrekombinationsreaktion als "Kurzschlußreaktion" wird, wahrscheinlich durch eine unzureichende Elektrolyleitfähigkeit an der Katalysatoroberfläche begünstigt.

Ein wichtiges Glied in der erwähnten Reaktionslaufkette ist die Bildung reaktiver Radikale und Ionen, die in der Konsequenz die chemische Abbaureaktion bewirken oder einleiten. Aufgabe der Erfindung war es somit, neue Wege zu finden um die katalysatorinterne Ladungsrekombinationsreaktion weitgehend einzuschränken und zusätzliche Radikale zur Reaktionsreaktivierung zu erschliessen.

Die Aufgabe wurde dadurch gelöst, daß dem Katalysator und/oder
a) Leitfähigkeitsverbesserer insbesondere der kapillaraktiven und/oder hygroskopischen Art und/oder
b) Halogenverbindungen, ausgenommen Fluorverbindungen als Leitfähigkeitsverbesserer und Radikalbildner zugesetzt werden.

Das erfinderische, im weiteren beschriebene Verfahren zur Reinigung von Gasen, Abgasen und Dämpfen, die Aerosole enthalten können und von Wasser, die mit unerwünschten chemischen Stoffen kontaminiert oder gemischt sind, mit Hilfe einer Photokatalysereaktion, die an der Oberfläche von Halbleiteroxidkatalysatoren, insbesondere Titandioxid, in einem geschlossenen oder offenen Apparat oder Apparatesystem unter Einwirkung von Energie in Form von Licht, insbesondere kurzwelligem Licht, nach den Verfahren des Schwebe- oder Festbettkatalysatorprinzips abläuft und gegebenenfalls einer Reinigung des Katalysators von den durch die Photokatalyse entstandenen Mineralisationsprodukten, dadurch gekennzeichnet, daß das Halbleiteroxid
a) mit mindestens einer mineralischen Säure, Lauge, Salz oder Hydrolyseprodukten als die Oberflächen- und Kapillarelektrolyleitfähigkeit verbessernden Mitteln versetzt wird und/oder
b) mit mindestens einer mineralischen Halogenverbindung, ausgenommen reine Fluorverbindungen, als Halogenradikalbildnern dotiert wird, oder
c) mit mindestens einem Mittel, das die Eigenschaften des Kapillarelektrolyleitfähigkeitverbesserers gemäss a) und des Halogenradikalbildners gemäss b) in einem vereint.

Das eingesetzte Halbleiteroxid ist zudem, je nach Bedarf, neben den erfinderischen Dotierungsmitteln, zur Erhöhung der verfahrensreaktiven Radikaldichte, als Zusatzkatalysator mit Metallen der Edelmetallelementgruppe des periodischen Systems der chemischen Elemente, insbesondere Palladium und/oder Platin dotiert.

Die Säuren, Laugen, Salze und Hydrolyseprodukte gemäss a) sind bevorzugt hygroskopisch wirkende Verbindungen.

Wie bei allen elektrochemischen Reaktionen spielt die Gegenwart von Elektrolyt die Rolle des Ionenleiters. Im vorliegenden Falle ist das die am Photokatalysator adsorbierte wässrige Phase oder mobile Protonen oder Hydroxygruppen enthaltende Oberflächenbedeckung. In Gegenwart von Luft oder anderen wasserfeuchten Gasen ist flüssiger Elektrolyt an dem verwendeten Titandioxid, mit vorzugsweise hoher innerer Oberfläche mit Porenstruktur, in der Form von Kapillarkondensat in den meisten Fällen in ausreichender Menge vorhanden.

Die erfinderischen kapillaraktiven, vorzugsweise hygroskopischen Mittel gemäß a) bewirken bei einem zu geringen Wassergehalt im Photokatalysereaktor, z.B. durch ein außergewöhnliches Ansteigen der Reaktionstemperatur über die Normalwerte von zwischen 15 bis 50° C hinaus oder bei geringer Gasfeuchte, daß die nachteilige TiO₂ -Ladungsrekombinationen nicht dominiert, indem eine Elektrolytleitfähigkeitsverbesserung auch bei kleinem Wassergehalt.oder erhöhter Temperatur erzielt werden.

Beispiele von gemäß dem vorliegenden Verfahren einzusetzender Verbindungen sind:
gemäß a) Schwefelsäure, Phosphorsäure, Ammoniak, Titansäure, Kalilauge, Calciumchlorid, Eisenhydroxid, Aluminiumhydroxid, Cerhydroxid, Wolframsäure, Zirkonsäure, Zinnsäure
gemäß b) HCl, HBr, HJ, NaCl, KBr, AgCl, AgBr, AgJ
gemäß c) CaCl₂, MgCl₂, FeCl₃, Aluminiumchlorid, Titantetrachlorid Hydrolyseprodukte gemäss Seite 3 dem zweiten a) Absatz, sind nichtkalzinierte, hydroxygruppen enthaltende Metall- oder Halbmetallverbindungen.

Da einige der Verbindungen gemäß a), b) und c) wasserlöslich sein können und im Fall der Katalyasatorwäsche mit der Zeit in ihrer Konzentration zu stark herabgesetzt werden könnten um noch wirksam zu sein, kann auch eine Direktinjizierung dieser Mittel in den Reaktionsraum auf den Katalysator gerichtet erfolgen oder auch mit dem Katalysatorwaschwasser auf den Katalysator aufgebracht werden - oder durch Zersetzung von Verbindungen, die unter Reaktionsbedingungen die gewünschten Verbindungen auf dem Katalysator freisetzen. Beispiele hierfür sind z.B. Halogenkohlenstoffverbindungen wie Dichlormethan, Ammoniak, Hydrazin, Harnstoff Metallocene, Metallcarbonyle.

Der Vorteil des neuen Verfahrens soll an folgender Erläuterung des gemäß a), b) und c) doppeltwirksamen Chlorwasserstoffs demonstriert werden.

Durch die Dotierung des Photokatalysators mit Halogenwasserstoffsäuren oder deren Salzen, ausgenommen Fluorverbindungen, wird nicht nur eine Reaktionsbeschleunigung durch bessere Elektrolytleitfähigkeit z.B. durch die Erhöhung des Kapillardondensats am Katalysator erzielt. Durch die Reaktion zuvor generierter OH-Radikale mit Halogenidionen, ausgenommen Fluorid, entstehen gemäß Formel 1 hochreaktive Halogenradikale.

Diese können auch direkt durch Elektrodenreaktion an der photoinduzierten Anode (TiO₂⁺) gemäß Formel 2 entstehen.

Hal⁻ → + _{°}OH ^{°}Hal + OH⁻ 1

Hal⁻ → + TiO₂⁺ ^{°}Hal + TiO₂ 2

Halogenradikale vermögen eine Reihe von chemischen, unerwünschten organischen und anorganischen Verbindungen weitaus rascher zu mineralisieren als Hydroxylradikale. Die Reaktionsgeschwindigkeit kann diejenige der OH-Radikalreaktion um ein bis zu 20-faches übersteigen.

Das gilt insbesondere für folgende zu mineralisierende Stoffe:
Alkane, Isoalkane, halogenierte Alkane, halogenierte Alkene, Distickstoffmonoxid, Stickoxid, Stickstoffdioxid, Kohlenmonoxid, Ozon, organische und anorganische Schwefelverbindungen.

Ideale Photokatalysatordotierungsmittel gemäß a), b) und c) haben keine Absorption im Lichtwellenlängenbereich in dem Katalysatorhalbleiteroxide absorbieren. Ausgenommen hiervon sind aber solche Elektrolyte, in denen lichtinduziert ebenfalls eine Ladungstrennung hervorgerufen werden kann. Hierzu gehören z.B. die Oxo-und Hydroxogruppen enthaltenden Schwermetallverbindungen wie z.B. die des Eisens, Zinks, Zirkons oder Niobs.

Die Dotierung zwecks Erhöhung der Elektrolytleitfähigkeit ist nicht auf die flüssigen Elektrolyte beschränkt. Speziell solche Polymeren wie sie bei der Hydrolyse von Metallsalzen und metallorganischen Verbindungen entstehen, enthalten eine große Zahl von Hydroxylfunktionen, die Festionenleitungseigenschaften haben. Ihre Ionenleitfähigkeit in Verbindung mit ihrer Hygroskopizität kann ihnen hervorragende Elektrolyteigenschaten.verleihen. Beispiele hierfür sind die Hydrolysate von Gallium-, Zinn-,Titan-,Zirkonium- und Eisensalzen.

Als besonders vorteilhaft hat sich die intermittierende oder kontinuierliche Behandlung mit Reduktionsmitteln wie Ammoniak oder ammononiakabspaltenden Stoffen wie z.B. Harnstoff bei der NOₓ -Mineralisierung erwiesen.

Um Verluste von Halogen als Cokatalysator zu minimieren kann es vorteilhaft sein, Halogen als schwerlösliche Verbindung am Photokatalysator zu fixieren. Das gelingt z.B. durch chemische Fixierung als schwerlösliche Verbindung wie z.B.an Blei, Silber, Gold als Bleichlorid, Silberchlorid oder Goldchlorid. Diese Verbindungen sind besonders vorteilhaft bei der Stickoxidoxidation zu Salpetersäure einsetzbar.

Die beschriebene und beanspruchte Dotierung der Halbleiteroxide mit Mitteln der Kategorie a) Säuren,Laugen,Salzen oder Hydrolyseprodukten und solchen der Kategorie b), nämlich Halogenverbindungen oder Mitteln die deren Funktionen und Eigenschaften in einem Mittel c),vereinen,ist beliebig kombinierbar und variierbar.

Die Mittel können als Einzelprodukte oder im Gemisch mit Mitteln aus den verschiedenen Kategorien a),b) und c) entsprechend dem Einsatzzweck optimiert zusammengesetzt werden.

Die Hydrolyseprodukte sind zum Beispiel solche Mittel, wie lediglich hydrolisierte, jedoch nicht kalzinierte,Titanate oder hydrolysierte Aluminate.

Die Hydrolyse kann auch im Reaktor selbst erfolgen, wenn entsprechend applizierbare Mittel zum Einsatz kommen.

Umsomehr, da die Klasse der Metallate (Metallalkoholate) hoch hydrolyseempfindlich ist.
Andererseits sind die Metallalkoholate oft flüssig und lassen sich deshalb sehr gut, auch in Kleinstmengen,in den Reaktorraum eindosieren.
Deren Polykondensationsneigung,unter Einwirkung von Wasser,begünstigt zudem stark die Oberflächenhydroxylgruppenbildung, die auf der Katalysatoroberfläche wirksam werden, was die Reaktionsabläufe gemäss den Formeln 1 und 2 stützt.
Desweiteren wurde gefunden, dass die Dotierungsmittel in der Form ihrer chemisch reaktiven Stoffe auf den Katalysator aufgebracht werden können.

Das erfindungsgemässe Verfahren ist deshalb auch dadurch gekennzeichnet, dass mindestens eine der a), b) und c) genannten Substanzen nicht als solche auf den Katalysator appliziert werden, sondern in Form chemisch reaktiver Stoffe, die durch eine chemische Reaktion eine oder mehrere Verbindungen nach a),b) oder c) auf dem Photokatalysator abscheiden. Vorzugsweise handelt es sich hierbei um solche Stoffe, die als gas- oder dampfförmige Verbindungen über den Photokatalysator geleitet werden können.

Der Einsatz nichtmineralischer Dotierungsmittel, wie zum Beispiel Dichlormethan,Mercaptane oder Phosphorester,gemäss dem vorliegenden Verfahren, ist so zu verstehen, dass diese Verbindungen erst auf der Katalysator- (Halbleiteroxid-) oberfläche in die mineralische, aktiv wirksame Substanz umgewandelt werden.
Im Falle von Dichlormethan ist im Effekt der mineralische Chlorwasserstoff der Halogenradikalbildner.

Beispiel 1 zeigt den Einsatz von Dichlormethan.

Die Reinigung des Photokatalysators zum Zwecke der Regenerierung der katalytischen Wirksamkeit des Katalysators,erfolgt insbesondere,durch das Entfernen der aus der Photokatalysereaktion entstandenen Mineralisationsprodukte.

Dies kann geschehen durch eine Wäsche der wasserlöslichen Mineralisate oder zum Beispiel durch thermische Verfahren, wie Desorption oder Zersetzung. Flüchtige Mineralisationsprodukte wie zum Beispiel Schwefelsäure oder Salpetersäure, oder deren Ammoniumsalze, können durch Verdampfen, Sublimieren oder thermische Spaltung vom Photokatalysator entfernt werden.
Dabei sollte eine obere thermische Behandlungsgrenze von 600^{o}C nicht überschritten werden,um zu verhindern, dass der Photokatalysator Aktivitätsverluste erleidet.

Bei der Katalysatorwäsche mittels Wasser, muß danach nicht unbedingt getrocknet werden. Der verbleibende Wasserfilm bzw. Flüssigelektrolytschichtfilm, sollte jedoch nur dünn sein,um die Photonentransparenz zum Katalysator hin nicht zu beeinträchtigen und um die Diffusion von Reaktanden und OH-Radikalen nicht zu behindern.

Nach dem Benetzen des Photokatalysators mit Elektrolyt, kann somit eine Trocknung sogar vorteilhaft sein, um den Elektrolytgehalt auf eine derartige Schichtdicke zu bringen, wie sie der des Kapillarkondensats und nur weniger Elektrolytmolekularlagen entspricht
Nach dem Benetzen des Photokatalysators mit Elektrolyt, kann eine Trocknung sogar vorteilhaft sein, weil dann ein Elektrolytgehalt mit einer Schichtdicke und Menge resultiert, wie sie der vorteilhaften Schichtdicke des Kapillarkondensats und nur weniger Elektrolytmolekularlagen entspricht.
Insofern reicht es auch aus, anstelle einer Trocknung des Katalysators nach der Elektrolytbehandlung, diesen nur einfach abzuschleudern oder abzuzentrifugieren.

Der Photokatalysator kann auch mittels gasförmiger bzw. aerosolförmiger Stoffe appliziert beziehungsweise generiert werden, die eines oder mehrere chemische Elemente enthalten, die in Elektrolyte umgewandelt werden können.

Dazu gehören Stoffe wie zum Beispiel Ammoniak,Schwefeldioxid Halogenwasserstoffe,Stickstoffoxide,Phosphine,Phosphor- und Schwefelorganische Verbindungen sowie Phospor- und Schwefelhalogenverbindungen.

Es hat sich gezeigt, dass die Elektrolytdotierung des Photokatalysators auch eine katalysierende Reaktionsbeschleunigung von mineralisierenden Umsetzungen in anaeroben bis reduzierend wirkendem Reaktionsmedium bewirkt.

Entsprechend wird die Umsetzung von Oxidationsmitteln, wie Zum Beispiel Stickstoffoxiden, Schwefelhexafluorid,Schwefeldioxid, organischen Fluorverbindungen, mit reduzierenden Stoffen, wie zum Beispiel Schwefelwasserstoff,Phosphorwasserstoff und Wasserstoff zu den entsprechenden Produkten, wie elementarer Schwefel, Stickstoff und Wasser beschleunigt.

Speziell bei der Verwendung von halogenhaltigen Dotierungsmitteln,oder auch bei der Mineralisation von halogenorganischen Verbindungen, ausser Fluorverbindungen, kann es in oxidierender Atmosphäre zur Bildung von Phosgen,Bromphosgen, elementarem Chlor,Brom oder Jod kommen. Damit diese Stoffe nicht in das Reingas gelangen, wird dem Photokatalysereaktor eine Ab- oder Adsorbtionsstufe, beispielsweise mittels Aktivkohleverwendung nachgeschaltet.

Eine vorzugsweise Verfahrensausgestaltung besteht darin, dass man dem Photokatalysereaktor ein Aktivkohlefestbettfilter nachschaltet.
Die Aktivkohle kann durch eine Wäsche mit reduzierend wirkenden wässrigen Lösungen, wie zum Beispiel Thiosulat und Hydrazinhydratlösung und anschliessende Trocknung regeneriert werden.

Eine weitere Möglichkeit bei der Nachbehandlung der Photokatalyseabgase-Nachbehandlung besteht in einer Gaswäsche in reduzierendem Reaktionsmedium.

Auch eine einfache Wasserwäsche ist in manchen Fällen für die Photokatalyseabgaswäsche ausreichend. Das dabei anfallende Waschwasser kann recycelt werden, wenn es durch, zum Beispiel stückiges Calziumsulfit oder ein ähnlich reduzierend wirkendes, stückiges Material geleitet wird.

Das Verfahren unter Anwendung eines elektrolytdotierten Photokatalysators kann auch zur Reinigung von Wasser eingesetzt werden. In einem solchen Falle ist der Photokatalysator so präpariert, dass er Sorptiveigenschaften besitzt, damit die Kontamitanten mit dem Katalysator in innigen Kontakt kommen und danach am Photokatalysator in der Gasphase der Photokatalyse unterworfen werden.
Dabei kann das zu reinigende Wasser gleichzeitig als Waschwasser für den Photokatalysator dienen.
Es ist aber auch möglich die Mineralisationsprodukte der Photokatalysereaktion in einem separaten Behandlungsschritt vorzunehmen und das Waschwasser gesondert aufzufangen.
Sofern das zu reinigende Wasser keinen hinreichenden Elektrolyt- bzw. Halogenidgehalt aufweist, können die entsprechenden Stoffe in der Gasphase in der vorher beschriebenen Form appliziert werden. Es ist auch möglich, die Stoffe dem zu reinigenden Wasser in sorbierbarer Form als Nichtelektrolyte zuzugeben.
Das Verfahren wird durch die nachfolgenden Beispiele belegt, ohne es auf diese zu beschränken.

### Beispiele

### Beispiel 1

100 m³ Rohluft mit einer relativen Luftfeuchtigkeit von 70% enthaltend 10 ppm NO wird bei 20°C so durch ein Bett von 1 kg fluidisieren Titandioxidpartikeln geleitet, die durch Hydrolyse von Titantetrachlorid und anschließende Calzination der ausgefällten Titansäure bei 500°C und anschließende Tränkung mit 5g Palladiumacetatlösung des Calzinats und Trocknung derselben erhalten worden waren, daß eine Auffenthaltszeit von 5 Sek. am Katalysatorbett gegeben ist. In das Fluidbett ist ein UV-Strahler Q 402Z4, Eingangsleistung 38OW der Firma Degussa eingehängt.Der Versuch wird unter Änderung der Versuchsparameter mehrfach wiederholt, wobei die Auswirkung unterschiedlicher zusätzlicher Rohluftzusätze untersucht wird:
a) 5 ppm Dichlormethan
b) 10 ppm Ammoniakgas
c) 5 ppm Dichlormethan und 20 ppm Ammoniakgas
d) ohne Zusätze
Die Reinluft wird auf den Gehalt auf NOx untersucht. Dabei werden je nach Rohluftkonditionierung unterschiedliche NOx-Abbauraten festgestellt wie aus der Tabelle 1 hervorgeht:

**Tabelle 1**

| Rohluftdurchsatz m³ | NOₓ - Abbaurate, % | | | |
|---|---|---|---|---|
| | a | b | c | d |
| 1.000 | 90 | 80 | 95 | 60 |
| 10.000 | 20 | 80 | 60 | 15 |

### Beispiel 2

100 m³/h Rohluft, enthaltend 10 ppm NO wird bei 20°C und mit einer relativen Luftfeuchte von 70% so durch ein Bett von 1 kg fluidisierten Titandioxidpartikeln geleitet, die durch Hydrolyse von Titantetrachlorid und anschließende Calzination der ausgefällten Titansäure bei 500°C und Imprägnation der calzinierten Partikel mit 1 Gewichts-% Silberchlorid durch Tränken mit wäßriger Silbernitralösung und Behandlung des silbernitratgetränkten Calzinats mit Steinsalzlosung, Wasserwäsche und schließlich Träknung mit Palladiumacetat in wäßriger Lösung und Trocknen erhalten worden waren, daß eine Aufenthaltszeit von 5 Sek. am Katalysatorbett gegeben ist.
In das Fluidbett ist ein UV-Strahler Q 402Z4, Eingangsleistung 380 Watt der Firma Degussa eingehängt. Der Versuch wird unter Änderung der Versuchsparameter mehrfach wiederholt, wobei die Auswirkung unterschiedlicher Rohluftzusätze untersucht wird:
a) 10 ppm Ammoniakgas
b) ohne Zusätze
Die Reinluft wird auf NOx-Gehalt untersucht. Dabei werden die in Tabelle 2 eingetragenen NOx-Abbauraten gefunden.

**Tabelle 2**

| Rohluftdurchsatz, m³ | NOₓ -Abbaurate, % | |
|---|---|---|
| | a | b |
| 1.000 | 95 | 90 |
| 10.000 | 80 | 50 |

### Beispiel 3

Durchführung wie Beispiel 2, Rohluftzusatz wie unter a). Die Rohluft wird jedoch nach jeweils 500 m3 Durchsatz entsprechend jeweils 5h Laufzeit, 5 Min.lang, mit 5ppm Dichlormethan dotiert. Dabei werden die in Tabelle 3 eingetragenen NOx-Abbauraten gefunden.

**Tabelle 3**

| Rohluftdurchsatz, m³ | NOₓ - Abbaurate, % |
|---|---|
| 1.000 | 95 |
| 10.000 | 95 |

### Beispiel 4

100 m³/h Rohluft, enthaltend 10 ppm CO und 10 ppm Methan werden bei 20°Grad C und unterschiedlichen Luftfeuchten so durch das in Beispiel 1 beschriebene Photokatalysatorfluidpartikelbett geleitet, daß eine Aufenthaltszeit von 5 Sek. am Beispiel Katalysatorbett gegeben ist. Die verwendeten Katalysatorpartikel, die entsprechend Beispiel 1 präpariert worden waren, werden einer weiteren Behandlung unterzogen, um sie mit einer vorteilhaften Elektrolytbeschichtung auszustatten. Die einzelnen Dosierungsmittel werden aus wäßrige Lösung aufgetragen und danach bei 50°C durch Evakuieren weitgehend getrocknet. In der Tabelle 4 sind die Ergebnisse des Versuches nach 1000 m³ Rohluftdurchsatz wiedergegeben.

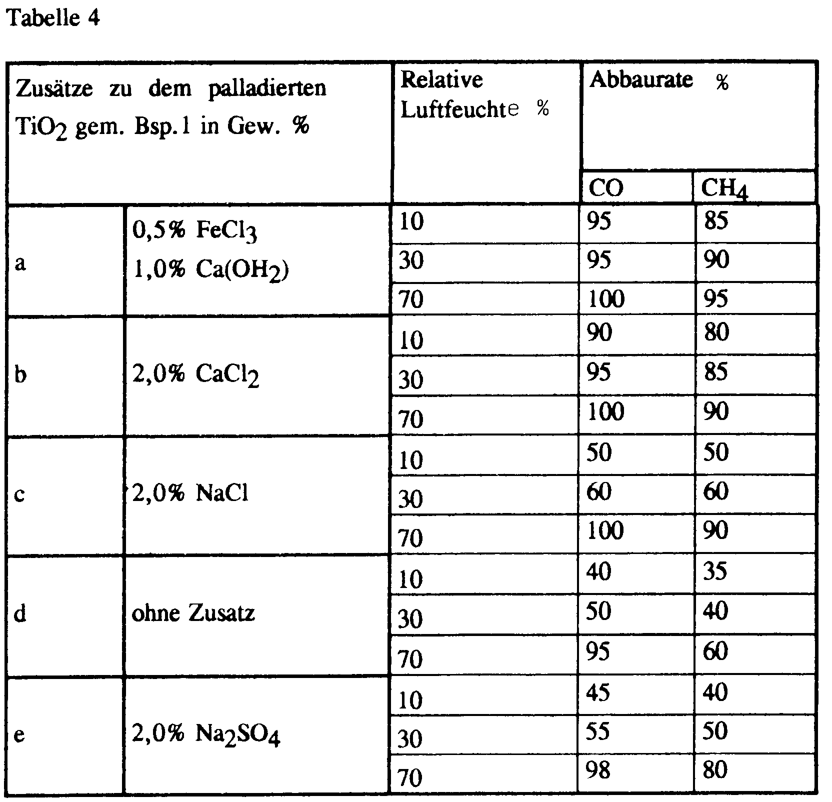

### Beispiel 5

Zum Nachweis, daß die Elektrolytdotierung des Photokatalysators auch im überwiegend reduziertem Gasmedium wirksam ist, werden 1.m3/h Stickstoff enthaltend 10 ppm NO und 40 ppm Wasserstoff bei 20°C und einem relativen Wassergehalt 30% so durch ein Bett von 10g fluidisiertes Titandioxid geleitet, das gemäß Beispiel 1 präpariert wurde, daß eine Aufenthaltszeit von 5 Sek. am Photokatalysatorfestbett gegeben ist. Dabei wird die Wirkung unterschiedlicher Zusätze zum Katalysator untersucht. Die Ergebnisse sind in der Tabelle 5 zusammengestellt. Die Zusätze zum Katalysator werden dabei als wäßrige Lösung auf den Katalysator aufgetragen und danach die feuchten Katalysatoren durch Evakuieren weitgehend getrocknet.

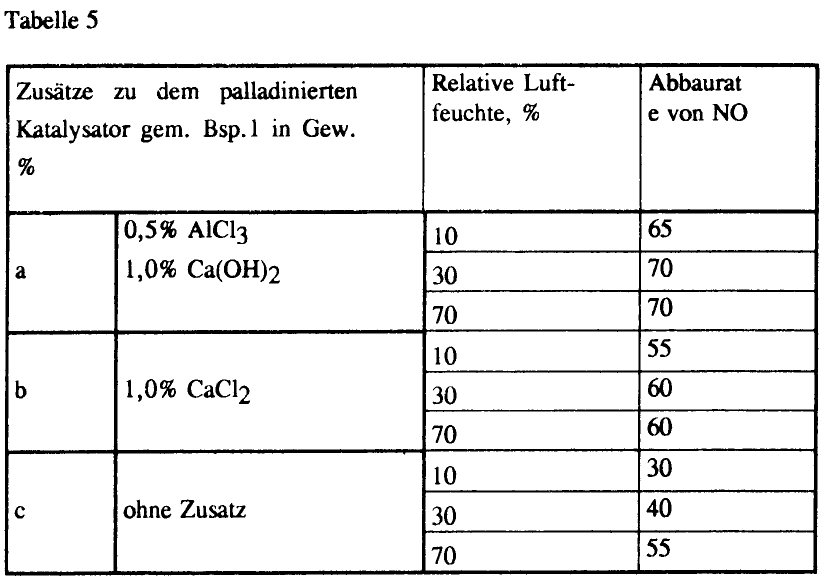

**Tabelle 0**

| Beispiele halbleitender Metalloxide und ihrer zur Ladungstrennung ( Excitonenerzeugung ) mindestens notwendigen Lichtwellenlänge. | | |
|---|---|---|
| Halbleitendes Oxid | Photonenenergie ( nm ) | Lichtfarbe |
| ZrO₂ | 248 | Ultraviolett |
| Ta₂O₅ | 310 | " |
| SnO₂ | 354 | " |
| KTaO₃ | 354 | " |
| SrTiO₃ | 365 | " |
| Nb₂O₅ | 365 | " |
| ZnO | 370 | " |
| BaTiO₃ | 376 | " |
| TiO₂ | 413 | Violett |
| V₂O₅ | 443 | Blau |
| Bi₂O₃ | 443 | " |
| PbO | 449 | " |
| WO₃ | 459 | " |
| FeWO₄ | 459 | " |
| YFeO₃ | 476 | " |
| Pb₄Ti₃WO₁₃ | 516 | Grün |
| Fe₂O₃ | 530 | " |
| PbFe₁₂O₁₉ | 539 | " |
| CdFeO₄ | 539 | " |
| CdO | 563 | " |
| HgNb₂O₇ | 689 | Rot |
| HgTa₂O₇ | 689 | " |
| CuO | 729 | " |
| PbO₂ | 729 | " |
| MnO₂ | 4768 | Infrarot |

## Patentansprüche

1. Verfahren zur Reinigung von Gasen, Abgasen und Dämpfen, die Aerosole enthalten können und von Wasser, die mit unerwünschten chemischen Stoffen kontaminiert oder gemischt sind, mit Hilfe einer Photokatalysereaktion, die an der Oberfläche von Halbleiteroxidkatalysatoren, insbesondere Titandioxid, in einem geschlossenen oder offenen Apparat oder Apparatesystem unter Einwirkung von Energie in Form von Licht, insbesondere kurzwelligem Licht, nach den Verfahren des Schwebe- oder Festbettkatalysatorprinzips abläuft und gegebenenfalls einer Reinigung des Katalysators von den durch die Photokatalyse entstandenen Mineralisationsprodukten, dadurch gekennzeichnet, daß das Halbleiteroxid
a) mit mindestens einer flüssigen oder festen mineralischen Säure, Lauge, Salz oder Hydrolyseprodukten als die Elektrolytleitfähigkeit, und die Kapillarkondensation verbessernde Mittel versetzt wird und/oder
b) mit mindestens einer mineralischen Halogenverbindung, ausgenommen reine Fluorverbindungen, als Halogenradikalbildner dotiert wird, oder
c) mit mindestens einem Mittel dotiert wird, das die Eigenschaften und Funktionen gemäß a) und b) in einem Mittel vereinen.

2. Verfahren nach Anspruch 1, dadurch gekennzeichnet, daß das Halbleiteroxid
a) mit mindestens einer flüssigen oder festen mineralischen Säure, Lauge, Salz oder Hydrolyseprodukten als die Elektrolyleitfähigkeit, und die Kapillarkondensation verbessernde Mittel versetzt wird und
b) mit mindestens einer mineralischen Halogenverbindung, ausgenommen reine Fluorverbindungen, als Halogenradikalbildner dotiert wird, oder
c) mit mindestens einem Mittel dotiert wird, das die Eigenschaften und Funktionen gemäß a) und b) in einem Mittel vereinen.

3. Verfahren nach Anspruch 1, dadurch gekennzeichnet, daß das Halbleiteroxid mit mindestens einer mineralischen Halogenverbindung, ausgenommen reine Fluorverbindungen, als Halogenradikalbildner dotiert wird

4. Verfahren nach Anspruch 1 bis 3, dadurch gekennzeichnet, daß das Halbleiteroxid, zur Erhöhung der reaktiven Radikaldichte, als Zusatzkatalysator mit Metallen der Edelmetallelementgruppe dotiert wird.

5. Verfahren gemäß den Anspruch 4, dadurch gekennzeichnet, daß das Halbleiteroxid mit den Metallen Palladium oder Platin dotiert wird.

6. Verfahren gemäß Anspruch 1 und 2, dadurch gekennzeichnet, daß die Mittel gemäß a) hygroskopisch wirkende Mittel sind.

7. Verfahren nach Anspruch 1 bis 3 , dadurch gekennzeichnet, daß die Mittel gemäß a), b) und c) direkt in den Reaktionsraum injiziert werden.

8. Verfahren nach Anspruch 1 und 2 dadurch gekennzeichnet, daß die Photokatalysatordotierungsmittel gemäß a), b), und c) keine Absorption im Lichtwellenlängenbereich haben in dem die Katalysatorhalbleiteroxide absorbieren.

9. Verfahren nach Anspruch 1, und 2 dadurch gekennzeichnet, daß die Photokatalysatordotierungsmittel gemäß a) selbst photokatalytisch wirken.

10. Verfahren nach den Ansprüchen 1 bis 3 dadurch gekennzeichnet, daß mindestens eine der unter a), b) oder c) genannten Substanzen nicht als solche auf den Katalysator appliziert werden, sondern in der Form chemisch reaktiver Stoffe, die durch chemische Reaktion eine oder mehrere Verbindungen nach a), b) oder c) auf dem Photokatalysator abscheiden.

11. Verfahren nach Anspruch 10 dadurch gekennzeichnet, daß die chemisch reaktiven Substanzen, die durch chemische Reaktionen eine oder mehrere Verbindungen nach a), b) oder c) auf dem Photokatalysator abscheiden als gas-oder dampfförmige Verbindungen über den Photokatalysator geleitet werden.

12. Verfahren nach Anspruch 1 bis 3 dadurch gekennzeichnet, daß Halogenidverluste dadurch minimiert werden, daß Metallionen, die schwerlösliche Halogenidverbindungen bilden können, im Elektrolyt auf der Oberfläche des Katalysators vorhanden sind insbesoners Ionen des Silbers und/oder Bleis sind.

13. Verfahren nach den Ansprüchen 1 bis 12,zur Oxidation von Stickstoff-Sauerstoffverbindungen zu Salpetersäure, dadurch gekennzeichnet, dass die Katalysatordotierung mit schwerlöslichen Metallhalogeniden erfolgt,zwecks Reaktionsbeschleunigung.

14. Verfahren nach Anspruch 13, dadurch gekennzeichnet, dass das Metallhalogenid ein Silberhalogenid ist.

15. Verfahren nach den Ansprüchen 1 bis 12,zur Reduktion von Stickstoff-Sauerstoffverbindungen zu Stickstoff, dadurch gekennzeichnet, dass die Reduktion mit Hilfe von Ammoniak oder anderen Reduktionsmedien, oder im Gemisch von Ammoniak und anderen Reduktionsmedien,erfolgt.

16. Verfahren nach den Ansprüchen 1 und 2, dadurch gekennzeichnet, dass die Hydrolyseprodukte nichtkalzinierte,hydroxygruppen enthaltende Metall- oder Halbmetallverbindungen sind.

17. Verfahren nach den Ansprüchen 1 bis 3, dadurch gekennzeichnet, dass die mineralischen Dotierungsmittel in der Form nichtmineralischer chemischer Verbindungen eingesetzt werden und sich erst auf der Katalysatoroberfläche in die mineralische, aktiv wirksame Substanz umwandeln.

18. Verfahren nach den Ansprüchen 1 bis 3,dadurch gekennzeichnet, dass die Halbleiteroxiddotierung mit Mitteln der Kategorien a), b) und c) derart erfolgt, dass die Mittel der einzelnen Kategorien miteinander beliebig kombinierbar und variierbar sind auch bezüglich der Gewichtsproportionen.

19. Verfahren nach Anspruch 1, dadurch gekennzeichnet, dass dem Photokatalysereaktor eine Reinigungsstufe nachgeschaltet wird, auf der Basis des Ab- oder Adsorptionsprinzips und/oder einer reduzierenden Wäsche.

20. Verfahren nach Anspruch 1,dadurch gekennzeichnet, dass die Photokatalysatorregeneration durch mindestens eines der Verfahren, Wäsche, Thermische Zersetzung,Desorption, Trocknung, Zentrifugieren erfolgt.

21. Verfahren nach Anspruch 1, dadurch gekennzeichnet, dass die Schadstoffe in einem ersten Schritt sorptiv aus der flüssigen Phase auf den Photokatalysator fixiert werden und dann in einem folgenden Schritt photokatalytisch mineralisiert werden.
